# EUROPÄISCHE PATENTSCHRIFT

(11) **EP 3 987 367 B1**
(45) Veröffentlichungstag und Bekanntmachung des Hinweises auf die Patenterteilung: **19.04.2023**
(21) Anmeldenummer: 20734372.4
(22) Anmeldetag: 22.06.2020
(51) Int. Cl.: G05B 19/042

(54) **MESSVORRICHTUNG**
MEASURING DEVICE
DISPOSITIF DE MESURE

(30) Priorität: 24.06.2019 DE 102019116877
(43) Veröffentlichungstag der Anmeldung: 27.04.2022
(73) Patentinhaber: M&H Inprocess Messtechnik GmbH, 88289 Waldburg (DE)
(72) Erfinder: WIEST, Christoph, 88250 Weingarten (DE)
(74) Vertreter: Otten, Roth, Dobler & Partner mbB Patentanwälte
(86) Internationale Anmeldenummer: PCT/EP2020/067367
(87) Internationale Veröffentlichungsnummer: WO 2020/260207

(56) Entgegenhaltungen:
- EP-A1- 2 711 665
- EP-A1- 2 932 189
- EP-A2- 0 337 670
- EP-B1- 2 932 189
- DE-A1-102010 053 911
- US-A1- 2012 004 886

## Beschreibung

### Stand der Technik

Ein Messsystem für Werkzeugmaschinen, welches aus einem Receiver und mehreren Tastern besteht, wobei die Taster Messdaten mittels Lichtsignalen an den Receiver übermitteln, sind bekannt. Ein Messystem für Werkzeugmaschinen umfassend einen Receiver und mehreren Tastern ist beispielsweise aus der EP 2 932 189 A1 bekannt.

Ein bekanntes Messsystem umfasst einen Empfänger, welcher optische Signale im infraroten Bereich von zwei Tastern empfangen kann. Das Messsystem arbeitet hierzu sequentiell.

Nachteilig an einem solchen System ist beispielsweise, dass eine Informationsübertragung zwischen Receiver und Empfänger vergleichsweise lange dauert.

### Aufgabe und Vorteile der Erfindung

Aufgabe der Erfindung ist es, eine verbesserte Messvorrichtung bereitzustellen, mittels welcher mehrere Messinstrumente an eine Sende- und Empfangseinheit koppelbar sind.

Diese Aufgabe wird durch die Merkmale des Anspruchs 1 gelöst.

In den abhängigen Ansprüchen sind vorteilhafte und zweckmäßige Ausführungsformen der Erfindung angegeben.

Der Kern der Erfindung ist in einer Messvorrichtung umfassend eine Sende- und Empfangseinheit und mindestens zwei oder mehr Messinstrumente zu sehen, wobei jedes Messinstrument ein, insbesondere einziges Sende- und Empfangsorgan umfasst, wobei die Sende- und Empfangseinheit zwei oder mehr Sende- und Empfangsmodule aufweist, wobei das Sende- und Empfangsmodul über eine drahtlose Verbindung mit einem Sende- und Empfangsorgan kommuniziert, wobei jeweils ein Sende- und Empfangsmodul mit jeweils einem einzigen Sende- und Empfangsorgan eines einzigen Messinstruments kommuniziert, wobei die Sende- und Empfangseinheit eine Kontrolleinheit umfasst, welche regelt und überwacht, welches Sende- und Empfangsmodul, insbesondere auf welchem Kommunikationskanal, mit welchem Sende- und Empfangsorgan eines Messinstruments kommuniziert.

Bevorzugterweise kommuniziert ein Sende- und Empfangsmodul auf einem insbesondere einzigen Kommunikationskanal mit einem Sende- und Empfangsorgan. Beispielsweise kommuniziert jedes Sende- und Empfangsmodul auf einem Kommunikationskanal mit einem Sende- und Empfangsorgan, wobei der Kommunikationskanal verschieden ist von einem weiteren Kommunikationskanal mittels welchem ein weiteres Sende- und Empfangsmodul mit einem weiteren Sende- und Empfangsorgan kommuniziert.

Vorteilhafterweise umfasst ein Sende- und Empfangsmodul einen Sender, einen Empfänger, eine Antenne und/oder einen Verstärker. Vorteilhafterweise umfasst ein Sende- und Empfangsorgan einen Sender, einen Empfänger, eine Antenne und/oder einen Verstärker.

Das Sende- und Empfangsorgan und/oder das Sende- und Empfangsmodul kann auch zweiteilig, insbesondere mehrteilig ausgebildet sein. Beispielsweise umfasst das Sende- und Empfangsorgan und/oder das Sende- und Empfangsmodul als einen ersten Teil einen Sender und als einen zweiten Teil einen Empfänger. Erfindungsgemäß umfasst das Sende- und Empfangsmodul eine Recheneinheit, um eine Kommunikation z.B. ein Signal, welche über den Kommunikationskanal übertragen wird, zu empfangen, zu verarbeiten und/oder zu speichern. Beispielsweise ist eine Recheneinheit des Sende- und Empfangsorgans dazu ausgebildet, ein Messsignal des Messinstruments zu senden, zu empfangen, zu verarbeiten und/oder zu speichern. Eine Recheneinheit ist vorteilhafterweise als ein Halbleiterbauteil mit einem integrierten Schaltkreis vorhanden. Vorteilhafterweise umfasst jedes Sende- und Empfangsmodul eine Recheneinheit, um eine Kommunikation z.B. ein Signal, welche über den Kommunikationskanal übertragen wird, zu senden. Erfindungsgemäß weist jedes Sende- und Empfangsmodul ein Recheneinheit auf, wobei jede Recheneinheit dazu ausgebildet ist, ein Messsignal des Messinstruments zu empfangen, zu verarbeiten und/oder zu speichern.

Eine vorteilhafte Modifikation der Messvorrichtung ist, dass ein erstes Sende- und Empfangsmodul auf einem ersten Kommunikationskanal mit einem Sende- und Empfangsorgan kommuniziert und dieser verschieden ist zu einem weiteren Kommunikationskanal mittels welchem ein weiteres Sende- und Empfangsmodul mit einem weiteren Sende- und Empfangsorgan kommuniziert. Hierdurch ist eine vergleichsweise sichere Kommunikation zwischen Sende- und Empfangsmodul und Sende- und Empfangsorgan realisiert.

Bevorzugterweise ist der ersten Kommunikationskanal verschieden zu jedem weiteren Kommunikationskanal mittels welchem ein weiteres Sende- und Empfangsmodul mit einem weiteren Sende- und Empfangsorgan kommuniziert. Vorteilhafterweise sind alle Kommunikationskanäle mittels welchem die Sende- und Empfangsmodule der Sende- und Empfangseinheit mit einem Sende- und Empfangsorgan eines Messinstruments kommunizieren verschieden zueinander.

Weiter wird vorgeschlagen, dass die drahtlose Verbindung eine Funkverbindung ist. Hierdurch ist eine vergleichsweise flexible Anordnung der Sende- und Empfangseinheit an der Werkzeugmaschine und/oder der Messmaschine realisiert. Vorstellbar ist auch, dass die drahtlose Verbindung als eine Lichtverbindung, insbesondere als eine Infrarotverbindung vorhanden ist. Vorteilhafterweise kommuniziert ein Sende- und Empfangsmodul mit einem Sende- und Empfangsorgan mittels elektromagnetischer Wellen, insbesondere elektromagnetischer Signale.

Vorteilhafterweise ist der Kommunikationskanal als ein Kanal, insbesondere als ein Funkkanal vorhanden. Die Funkverbindung ist beispielsweise als eine analoge und/oder digitale Funkverbindung ausgebildet. Die Funkverbindung ist beispielsweise eine WLAN-, Bluetooth-, und/oder NFC-Funkverbindung. Das Sende- und Empfangsmodul und/oder das Sende- und Empfangsorgan umfasst vorteilhafterweise einen Bluetooth-, WLAN- und/oder NFC-Sender- und/oder Empfängerelement. Beispielsweise ist das Bluetooth-, WLAN- und/oder NFC-Sender- und/oder Empfängerelement in Form eines Halbleiterbauteils mit integriertem Schaltkreis ausgebildet.

Von Vorteil erweist sich auch, dass ein Kommunikationskanal aus einer insbesondere einzigen Frequenz besteht, sodass ein Sende- und Empfangsmodul mittels einem insbesondere einzigen Kommunikationskanal mit einem Sende- und Empfangsorgan kommuniziert. Beispielsweise besteht ein Kommunikationskanal aus einer insbesondere einzigen Funkfrequenz, sodass ein Sende- und Empfangsmodul mittels einem insbesondere einzigen Kommunikationskanal mit einem Sende- und Empfangsorgan kommuniziert. Bevorzugterweise besteht der Kommunikationskanal aus eine Frequenzwechselsequenz. Beispielsweise umfasst der Kommunikationskanal mehrere verschiedene Frequenzen, z.B. zumindest zwei verschiedene Frequenzen. Denkbar ist, dass die verschiedenen Frequenzen des Kommunikationskanals sich überlagernd vorhanden sind. Vorstellbar ist auch, dass die verschiedenen Frequenzen des Kommunikationskanals zeitlich nacheinander vorhanden sind, z.B. abwechselnd, insbesondere in einem zeitlich definierten Ablauf. Vorteilhafterweise sind die Frequenzen eines ersten Kommunikationskanals, insbesondere alle Frequenzen des ersten Kommunikationskanals, verschieden zu insbesondere allen Frequenzen eines weiteren Kommunikationskanals, insbesondere verschieden zu allen Frequenzen aller weiterer Kommunikationskanäle.

Bevorzugterweise regelt und überwacht die Kontrolleinheit, welches Sende- und Empfangsmodul der Sende- und Empfangseinheit auf welcher Frequenz mit welchem Sende- und Empfangsorgan eines Messinstruments kommuniziert. Bevorzugterweise regelt und überwacht die Kontrolleinheit, mit welcher Frequenz oder mit welcher Frequenzwechselsequenz ein Sende- und Empfangsmodul der Sende- und Empfangseinheit mit einem Sende- und Empfangsorgan eines Messinstruments kommuniziert. Beispielsweise umfasst die Kontrolleinheit eine insbesondere einzige Tabelle, in welchen die verschiedenen Frequenzen eines Kommunikationskanals hinterlegt sind. Die Tabelle ist beispielsweise als eine Frequenzsprungtabelle vorhanden. Beispielsweise ist mittels der Tabelle eine zeitliche Abfolge der Frequenzen festgelegt. Denkbar ist, dass die Kontrolleinheit mehrere insbesondere verschiedene Tabellen aufweist. Vorstellbar ist, dass von den mehreren Tabellen jeweils eine Tabelle einem Kommunikationskanal zugeordnet ist. Denkbar ist auch, dass die Kontrolleinheit eine Tabelle aufweist, wobei in der Tabelle die Frequenzen der Kommunikationskanäle hinterlegt sind. Insbesondere ist durch die Tabelle der Kontrolleinheit die Frequenz eines Kommunikationskanals und/oder die Frequenzen eines Kommunikationskanals festgelegt. Zum Beispiel sind durch die Tabelle die Frequenzen aller Kommunikationskanäle festgelegt. Die Kontrolleinheit ist beispielsweise als ein Halbleiterbauteil mit einem integrierten Schaltkreis ausgebildet.

Außerdem ist es von Vorteil, dass eine Anzahl der Sende- und Empfangsmodule der Sende- und Empfangseinheit zumindest gleich einer Anzahl an Messinstrumenten der Messvorrichtung und/oder einer Anzahl der vorhandenen Sende- und Empfangsorgane ist. Hierdurch ist die Messvorrichtung vergleichsweise günstig ausgebildet.

Auch wird vorgeschlagen, dass eine Frequenz, mittels welchem ein erstes Sende- und Empfangsmodul mit einem ersten Sende- und Empfangsorgan kommuniziert, verschieden ist zu einer weiteren Frequenz, mittels welchem ein zweites Sende- und Empfangsmodul mit einem zweiten Sende- und Empfangsorgan kommuniziert.

Eine vorteilhafte Ausbildung der Messvorrichtung ist, dass eine Frequenz, mittels welchem ein erstes Sende- und Empfangsmodul mit einem ersten Sende- und Empfangsorgan kommuniziert, verschieden ist zu jeder Frequenz, mittels welchem ein weiteres Sende- und Empfangsmodul mit einem weiteren Sende- und Empfangsorgan kommuniziert. Hierdurch ist eine vergleichsweise störungsfreie Kommunikation der Sende- und Empfangseinheit mit dem jeweiligen Messinstrument realisiert.

Denkbar ist auch, dass ein Kommunikationskanal, insbesondere in der Form eines Funkkanals, mehrere Funkfrequenzen aufweist. Beispielsweise überlagern sich die Funkfrequenzen eines Funkkanals. Vorteilhafterweise sind die Funkfrequenzen eines ersten Funkkanals, insbesondere alle Funkfrequenzen des ersten Funkkanals, verschieden zu insbesondere allen Funkfrequenzen eines weiteren Funkkanals, insbesondere verschieden zu allen Funkfrequenzen aller weiterer Funkkanäle.

Auch ist es von Vorteil, dass jedes Messinstrument ein einziges Sende- und Empfangsorgan umfasst. Hierdurch ist das Messinstrument vergleichsweise kostengünstig ausgebildet.

Von Vorteil erweist sich ebenfalls, dass die Sende- und Empfangseinheit eine Schnittstelle aufweist, wobei die Schnittstelle dazu ausgebildet ist, die Sende- und Empfangseinheit mit einer Maschine, insbesondere einer Werkzeugmaschine und/oder Messmaschine zu verbinden. Hierdurch ist eine Kommunikation der Messvorrichtung mit einem Steuerungssystem der Werkzeugmaschine und/oder einem Steuerungssystem der Messmaschine realisierbar. Vorteilhafterweise ist hierdurch eine Integration der Messvorrichtung an oder in ein Steuerungssystem der Werkzeugmaschine und/oder an oder in ein Steuerungssystem der Messmaschine realisierbar.

Vorteilhafterweise kann die Sende- und Empfangseinheit über die Schnittstelle mit einem Steuerungssystem, z.B. einer Steuereinheit einer Werkzeug- und/oder Messmaschine kommunizieren. Das Steuerungssystem ist beispielsweise als eine CNC-Steuerung ausgebildet. Denkbar ist auch, dass die Sende- und Empfangseinheit über die Schnittstelle und/oder mittels einer weiteren Schnittstelle mit einem Rechenmittel, z.B. einem Messcomputer, kommunizieren kann. Die Schnittstelle der Sende- und Empfangseinheit ist beispielsweise als ein USB-, Netzwerk-, oder Funkschnittstelle ausgebildet, z.B. in Form einer USB-Buchse, einer Netzwerk-Buchse, einer CAT-Buchse und/oder eines CAT-Moduls.

Weiter ist es von Vorteil, dass ein Messinstrument als ein Touch-Probe-Messtaster, ein berührungsloser Messtaster und/oder als ein scannender Messtaster ausgebildet ist. Das Messinstrument ist beispielsweise in Form eines Messtasters und/oder in Form eines Tastkopfs vorhanden. Denkbar ist auch, dass das Messinstrument in Form eines Linienscanners ausgebildet ist. Beispielsweise ist das Messinstrument als ein insbesondere optisch arbeitender Abstands- und/oder Distanzmesser, z.B. als ein konfokal-chromatisch arbeitender Sensor, vorhanden. Vorstellbar ist auch, dass das Messinstrument als ein Interferometer ausgebildet ist oder auf Basis eines interferometrischen Messprinzips arbeitet. Ebenfalls denkbar ist, dass das Messinstrument als ein Schichtdickenmessinstrument vorhanden ist. Beispielsweise arbeitet das Messinstrument auf Basis einer Ultraschallsignal-Auswertung.

Eine vorteilhafte Ausbildung der Erfindung ist eine Maschine, insbesondere eine Werkzeug- und/oder Messmaschine mit einer Messvorrichtung nach einer der vorangegangen genannten Ausführungsformen.

### Beschreibung eines Ausführungsbeispiels

Ein Ausführungsbeispiel wird anhand der nachstehenden schematischen Zeichnung unter Angabe von weiteren Einzelheiten und Vorteilen näher erläutert.

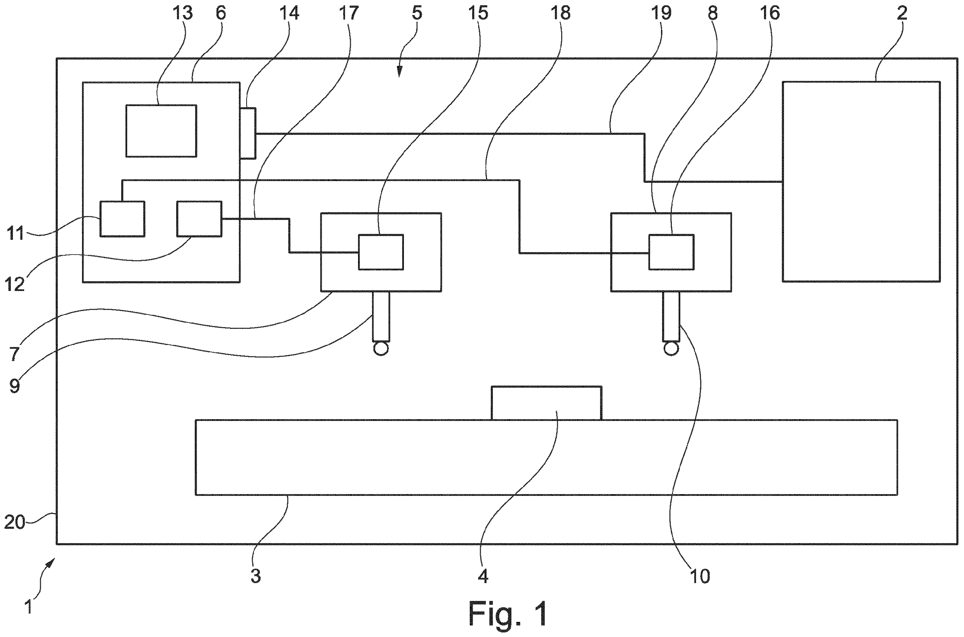

Figur 1 zeigt eine schematische Darstellung einer Werkzeugmaschine mit einer Messvorrichtung.

In Figur 1 ist eine Werkzeugmaschine 1 mit einem Gehäuse 20, einem Steuerungssystem 2, einem Bearbeitungstisch 3 und einem Werkstück 4 dargestellt. Weitere Elemente der Werkzeugmaschine 1 sind aus Übersichtlichkeitsgründen nicht dargestellt.

An die Werkzeugmaschine 1 ist eine erfindungsgemäße Messvorrichtung 5 anordenbar und in Figur 1 im angeordnet Zustand dargestellt. Die Messvorrichtung 5 umfasst eine Sende- und Empfangseinheit 6, ein erstes Messinstrument 7 und ein zweites Messinstrument 8.

Die Messinstrumente 7 und 8 sind beispielsweise als Touch-Probe-Messtaster umfassen einen Taststift 9, 10 ausgebildet. Ein Messinstrument 7, 8 umfasst ein Sende- und Empfangsorgan 15, 16.

Die Sende- und Empfangseinheit 6 umfasst zwei Sende- und Empfangsmodule 11, 12, eine Kontrolleinheit 13 und z.B. eine Schnittstelle 14 zur Kommunikation mit dem Steuerungssystem 2 der Werkzeugmaschine 1.

Beispielsweise kommuniziert das Sende- und Empfangsmodul 11 der Sende- und Empfangseinheit 6 über einen ersten Kommunikationskanal 17 mit dem Sende- und Empfangsorgan 15 des Messinstruments 7. Beispielsweise kommuniziert das Sende- und Empfangsmodul 12 der Sende- und Empfangseinheit 6 über einen zweiten Kommunikationskanal 18 mit dem Sende- und Empfangsorgan 16 des Messinstruments 8.

Beispielsweise ist die Sende- und Empfangseinheit 6 der Messvorrichtung 5 mittels der Schnittstelle 14 mit dem Steuerungssystem 2 der Werkzeugmaschine 1 über einen weiteren Kommunikationskanal 19 verbindbar. Beispielsweise sind die Sende- und Empfangseinheit 6 und das Steuerungssystem 2 über eine physische Verbindung, z.B. mittels eines Kabel, z.B. mittels eines Datenkabels miteinander verbindbar.

### Bezugszeichenliste

- 1: Werkzeugmaschine
- 2: Steuerungssystem
- 3: Bearbeitungstisch
- 4: Werkstück
- 5: Messvorrichtung
- 6: Sende- und Empfangseinheit
- 7: Messinstrument
- 8: Messinstrument
- 9: Taststift
- 10: Taststift
- 11: Sende- und Empfangsmodul
- 12: Sende- und Empfangsmodul
- 13: Kontrolleinheit
- 14: Schnittstelle
- 15: Sende- und Empfangsorgan
- 16: Sende- und Empfangsorgan
- 17: Kommunikationskanal
- 18: Kommunikationskanal
- 19: Kommunikationskanal
- 20: Gehäuse

## Patentansprüche

1. Messvorrichtung (5) umfassend eine Sende- und Empfangseinheit (6) und mindestens zwei oder mehr Messinstrumente (7, 8), wobei jedes Messinstrument (7, 8) ein Sende- und Empfangsorgan (15, 16) umfasst, wobei die Sende- und Empfangseinheit (6) zwei oder mehr Sende- und Empfangsmodule (11, 12) aufweist, wobei ein Sende- und Empfangsmodul (11, 12) über eine drahtlose Verbindung mit einem Sende- und Empfangsorgan (15, 16) kommuniziert, wobei jeweils ein Sende- und Empfangsmodul (11, 12) mit jeweils einem einzigen Sende- und Empfangsorgan (15, 16) eines einzigen Messinstruments (7, 8) kommuniziert, wobei die Sende- und Empfangseinheit (6) eine Kontrolleinheit (13) umfasst, welche regelt und überwacht, welches Sende- und Empfangsmodul (11, 12) insbesondere auf welchem Kommunikationskanal (17, 18) mit welchem Sende- und Empfangsorgan (15, 16) eines Messinstruments (7, 8) kommuniziert, wobei jedes Sende- und Empfangsmodul (11, 12) eine Recheneinheit aufweist, wobei jede Recheneinheit dazu ausgebildet ist, ein Messsignal des Messinstruments (7, 8) zu empfangen, zu verarbeiten und/oder zu speichern.

2. Messvorrichtung (5) nach dem vorangegangenen Anspruch 1,
**dadurch gekennzeichnet, dass** ein erstes Sende- und Empfangsmodul (12) auf einem ersten Kommunikationskanal (17) mit einem Sende- und Empfangsorgan (15) kommuniziert und dieser verschieden ist zu einem weiteren Kommunikationskanal (18) mittels welchem ein weiteres Sende- und Empfangsmodul (11) mit einem weiteren Sende- und Empfangsorgan (16) kommuniziert.

3. Messvorrichtung (5) nach dem vorangegangenen Anspruch 1,
**dadurch gekennzeichnet, dass** die drahtlose Verbindung eine Funkverbindung ist.

4. Messvorrichtung (5) nach einem der vorangegangenen Ansprüche, **dadurch gekennzeichnet, dass** ein Kommunikationskanal (17, 18) aus einer Frequenz besteht, sodass ein Sende- und Empfangsmodul (11, 12) mittels einem Kommunikationskanal (17, 18) mit einem Sende- und Empfangsorgan (15, 16) kommuniziert.

5. Messvorrichtung (5) nach einem der vorangegangenen Ansprüche, **dadurch gekennzeichnet, dass** eine Anzahl der Sende- und Empfangsmodule (11, 12) der Sende- und Empfangseinheit (6) zumindest gleich einer Anzahl an Messinstrumenten (7, 8) der Messvorrichtung (5) und/oder einer Anzahl der vorhandenen Sende- und Empfangsorgane (15, 16) ist.

6. Messvorrichtung (5) nach einem der vorangegangenen Ansprüche, **dadurch gekennzeichnet, dass** eine Frequenz, mittels welchem ein erstes Sende- und Empfangsmodul (11) mit einem ersten Sende- und Empfangsorgan (16) kommuniziert, verschieden ist zu einer Frequenz, mittels welchem ein zweites Sende- und Empfangsmodul (12) mit einem zweiten Sende- und Empfangsorgan (15) kommuniziert.

7. Messvorrichtung (5) nach einem der vorangegangenen Ansprüche, **dadurch gekennzeichnet, dass** eine Frequenz, mittels welchem ein erstes Sende- und Empfangsmodul (11) mit einem ersten Sende- und Empfangsorgan (16) kommuniziert, verschieden ist zu jeder Frequenz, mittels welchem ein weiteres Sende- und Empfangsmodul (12) mit einem weiteren Sende- und Empfangsorgan (15) kommuniziert.

8. Messvorrichtung (5) nach einem der vorangegangenen Ansprüche, **dadurch gekennzeichnet, dass** jedes Messinstrument (7, 8) ein einziges Sende- und Empfangsorgan (15, 16) umfasst.

9. Messvorrichtung (5) nach einem der vorangegangenen Ansprüche, **dadurch gekennzeichnet, dass** die Sende- und Empfangseinheit (6) eine Schnittstelle (14) aufweist, wobei die Schnittstelle (14) dazu ausgebildet ist, dass die Sende- und Empfangseinheit (6) mit einer Maschine (1), insbesondere einer Werkzeug- und/oder einer Messmaschine verbindbar ist.

10. Messvorrichtung (5) nach einem der vorangegangenen Ansprüche, **dadurch gekennzeichnet, dass** ein Messinstrument (7, 8) als ein Touch-Probe-Messtaster, ein berührungsloser Messtaster und/oder als ein scannender Messtaster ausgebildet ist.

11. Maschine (1), insbesondere Werkzeug- und/oder Messmaschine mit einer Messvorrichtung (5) nach einem der vorangegangenen Ansprüche.

## Claims

1. Measuring device (5) comprising a transmitting and receiving unit (6) and at least two or more measuring instruments (7, 8), each measuring instrument (7, 8) comprising a transmitting and receiving agency (15, 16), wherein the transmitting and receiving unit (6) has two or more transmitting and receiving modules (11, 12), a transmitting and receiving module (11, 12) using a wireless connection to communicate with a transmitting and receiving agency (15, 16), wherein a respective transmitting and receiving module (11, 12) communicates with a respective single transmitting and receiving agency (15, 16) of a single measuring instrument (7, 8), wherein the transmitting and receiving unit (6) comprises a control unit (13) that controls and monitors which transmitting and receiving module (11, 12) communicates with which transmitting and receiving agency (15, 16) of a measuring instrument (7, 8), in particular on which communication channel (17, 18), wherein each transmitting and receiving module (11, 12) has a computing unit, each computing unit being designed to receive, to process and/or to store a measurement signal from the measuring instrument (7, 8).

2. Measuring device (5) according to preceding Claim 1, **characterized in that** a first transmitting and receiving module (12) communicates with a transmitting and receiving agency (15) on a first communication channel (17) and the latter is different from a further communication channel (18) by means of which a further transmitting and receiving module (11) communicates with a further transmitting and receiving agency (16).

3. Measuring device (5) according to preceding Claim 1, **characterized in that** the wireless connection is a radio connection.

4. Measuring device (5) according to one of the preceding claims, **characterized in that** a communication channel (17, 18) consists of one frequency, and so a transmitting and receiving module (11, 12) uses one communication channel (17, 18) to communicate with a transmitting and receiving agency (15, 16).

5. Measuring device (5) according to one of the preceding claims, **characterized in that** the number of transmitting and receiving modules (11, 12) of the transmitting and receiving unit (6) is at least identical to the number of measuring instruments (7, 8) of the measuring device (5) and/or to the number of transmitting and receiving agencies (15, 16) that are present.

6. Measuring device (5) according to one of the preceding claims, **characterized in that** a frequency by means of which a first transmitting and receiving module (11) communicates with a first transmitting and receiving agency (16) is different from a frequency by means of which a second transmitting and receiving module (12) communicates with a second transmitting and receiving agency (15).

7. Measuring device (5) according to one of the preceding claims, **characterized in that** a frequency by means of which a first transmitting and receiving module (11) communicates with a first transmitting and receiving agency (16) is different from every frequency by means of which a further transmitting and receiving module (12) communicates with a further transmitting and receiving agency (15).

8. Measuring device (5) according to one of the preceding claims, **characterized in that** each measuring instrument (7, 8) comprises a single transmitting and receiving agency (15, 16).

9. Measuring device (5) according to one of the preceding claims, **characterized in that** the transmitting and receiving unit (6) has an interface (14), the interface (14) being designed to allow the transmitting and receiving unit (6) to be connected to a machine (1), in particular a machine tool and/or a measuring machine.

10. Measuring device (5) according to one of the preceding claims, **characterized in that** a measuring instrument (7, 8) is in the form of a touch probe measuring sensor, a contactless measuring sensor and/or a scanning measuring sensor.

11. Machine (1), in particular machine tool and/or measuring machine, having a measuring device (5) according to one of the preceding claims.

## Revendications

1. Dispositif de mesure (5), comprenant une unité d'émission et de réception (6) et au moins deux ou plusieurs instruments de mesure (7, 8), chaque instrument de mesure (7, 8) comprenant un organe d'émission et de réception (15, 16), dans lequel l'unité d'émission et de réception (6) présente deux ou plusieurs modules d'émission et de réception (11, 12), un module d'émission et de réception (11, 12) communiquant avec un organe d'émission et de réception (15, 16) par une liaison sans fil, dans lequel respectivement un module d'émission et de réception (11, 12) communique avec respectivement un seul organe d'émission et de réception (15, 16) d'un seul instrument de mesure (7, 8), dans lequel l'unité d'émission et de réception (6) comprend une unité de contrôle (13) qui régule et surveille quel module d'émission et de réception (11, 12) communique avec quel organe d'émission et de réception (15, 16) d'un instrument de mesure (7, 8), en particulier sur quel canal de communication (17, 18), dans lequel chaque module d'émission et de réception (11, 12) présente une unité de calcul, chaque unité de calcul étant réalisée pour recevoir, traiter et/ou stocker un signal de mesure de l'instrument de mesure (7, 8).

2. Dispositif de mesure (5) selon la revendication précédente 1, **caractérisé en ce qu'**un premier module d'émission et de réception (12) communique sur un premier canal de communication (17) avec un organe d'émission et de réception (15) et celui-ci est différent d'un autre canal de communication (18) au moyen duquel communique un autre module d'émission et de réception (11) avec un autre organe d'émission et de réception (16).

3. Dispositif de mesure (5) selon la revendication précédente 1, **caractérisé en ce que** la liaison sans fil est une liaison radio.

4. Dispositif de mesure (5) selon l'une quelconque des revendications précédentes, **caractérisé en ce qu'**un canal de communication (17, 18) est composé d'une fréquence de sorte qu'un module d'émission et de réception (11, 12) communique au moyen d'un canal de communication (17, 18) avec un organe d'émission et de réception (15, 16).

5. Dispositif de mesure (5) selon l'une quelconque des revendications précédentes, **caractérisé en ce qu'**un nombre des modules d'émission et de réception (11, 12) de l'unité d'émission et de réception (6) est au moins égal à un nombre d'instruments de mesure (7, 8) du dispositif de mesure (5) et/ou à un nombre des organes d'émission et de réception (15, 16) existants.

6. Dispositif de mesure (5) selon l'une quelconque des revendications précédentes, **caractérisé en ce qu'**une fréquence au moyen de laquelle un premier module d'émission et de réception (11) communique avec un premier organe d'émission et de réception (16) est différente d'une fréquence au moyen de laquelle un deuxième module d'émission et de réception (12) communique avec un deuxième organe d'émission et de réception (15).

7. Dispositif de mesure (5) selon l'une quelconque des revendications précédentes, **caractérisé en ce qu'**une fréquence au moyen de laquelle un premier module d'émission et de réception (11) communique avec un premier organe d'émission et de réception (16), est différente de chaque fréquence au moyen de laquelle un autre module d'émission et de réception (12) communique avec un autre organe d'émission et de réception (15).

8. Dispositif de mesure (5) selon l'une quelconque des revendications précédentes, **caractérisé en ce que** chaque instrument de mesure (7, 8) comprend un seul organe d'émission et de réception (15, 16).

9. Dispositif de mesure (5) selon l'une quelconque des revendications précédentes, **caractérisé en ce que** l'unité d'émission et de réception (6) présente une interface (14), l'interface (14) étant réalisée pour permettre à l'unité d'émission et de réception (6) d'être reliée à une machine (1), en particulier à une machine-outil et/ou à une machine de mesure.

10. Dispositif de mesure (5) selon l'une quelconque des revendications précédentes, **caractérisé en ce qu'**un instrument de mesure (7, 8) est réalisé sous la forme d'un capteur de mesure à palpeur, d'un capteur de mesure sans contact et/ou d'un capteur de mesure à balayage.

11. Machine (1), en particulier machine-outil et/ou machine de mesure, comprenant un dispositif de mesure (5) selon l'une quelconque des revendications précédentes.
